# DEMANDE DE BREVET EUROPEEN

(11) **EP 4 834 742 A1**
(43) Date de publication de la demande: **04.11.2026**
(21) Numéro de dépôt: 26172123.7
(22) Date de dépôt: 14.04.2026
(51) Int. Cl.: B62K 21/12, B62J 11/00

(54) **PIÈCE DE MONTAGE POUR LE MONTAGE D'UN ENSEMBLE DE PROLONGATEURS ET SYSTÈME PROLONGATEUR COMPRENANT UNE TELLE PIÈCE DE MONTAGE**

(30) Priorité: 02.05.2025 FR 2504677
(71) Demandeur: Decathlon, 59650 Villeneuve d'Ascq (FR)
(72) Inventeur: NORDEY, Benoit, 59650 VILLENEUVE D'ASCQ (FR)
(74) Mandataire: Cabinet Beau de Loménie

(57) **Abrégé**

Pièce de montage (10) pour le montage, sur le cintre (C) d'un vélo (V), d'un ensemble de prolongateurs (38) comprenant des premier et deuxième supports de prolongateurs (50,80), ladite pièce de montage comprenant une première portion de montage (12) définissant un premier logement (18) configuré pour recevoir une première partie (C₁) du cintre de façon à entourer au moins partiellement ladite première partie du cintre, ladite première portion de montage étant en outre configurée pour coopérer avec le premier support de prolongateur pour le montage de ce dernier au cintre; une deuxième portion de montage (20) définissant un deuxième logement (26) configuré pour recevoir une deuxième partie (C2) du cintre, de façon à entourer au moins partiellement ladite deuxième partie du cintre, ladite deuxième portion de montage étant en outre configurée pour coopérer avec le deuxième support de prolongateur pour le montage de ce dernier au cintre; et au moins une portion de liaison (30) reliant ladite première portion de montage et ladite deuxième portion de montage.

## Description

### Domaine Technique

La présente invention concerne le domaine technique du montage de prolongateurs pour vélo sur le cintre d'un tel vélo. Le cintre d'un vélo est également appelé guidon. Il est généralement relié au cadre du vélo par l'intermédiaire d'une potence. L'ensemble formé par le cintre et la potence est appelé « combo ». Les prolongateurs, également appelés « aero bars » ou encore « triathlon bars » en langue anglaise, sont des accessoires prévus pour être montés à une partie centrale du cintre d'un vélo, notamment un vélo de triathlon. Un ensemble de prolongateurs comprend généralement deux accoudoirs destinés à supporter les avants bras du cycliste et deux tubes prolongateurs pouvant être saisis par les mains du cycliste. Ils permettent au cycliste de se placer dans une position aérodynamique plus compacte dans laquelle ses coudes sont rapprochés l'un de l'autre. Les prolongateurs permettent ainsi d'augmenter la vitesse de roulage tout en améliorant le confort du cycliste.

L'invention porte sur une pièce de montage permettant le montage d'un ensemble de prolongateurs sur le cintre d'un vélo, ainsi que d'un système prolongateur comprenant une telle pièce de montage et un tel ensemble de prolongateurs.

### Technique antérieure

On connait du document US 2005/044981, un système prolongateur comprenant un ensemble de prolongateurs formé de deux accoudoirs et deux tubes de prolongateur. Le système décrit dans ce document comprend en outre un support de prolongateurs constitué d'une pièce de base solidaire de la potence du vélo et d'une couronne coopérant avec la pièce de base afin d'entourer le cintre de manière à monter l'ensemble prolongateur audit cintre.

En premier lieu, ce système présente l'inconvénient de nécessiter une conformation spécifique de la potence du vélo pour pouvoir coopérer avec la couronne. Autrement dit, l'ensemble de prolongateurs décrit dans ce document ne peut pas être monté sur tous types de cintres de vélo et s'avère peu polyvalent.

Un autre inconvénient du système de ce document est que le support de prolongateurs, formé par la pièce de base solidaire de la potence et la couronne, est monté directement au cintre. Or, le cintre des vélos destinés à être équipés de prolongateurs, notamment les vélos de triathlon, est généralement fabriqué en carbone. Ces cintres en carbone sont sensibles aux rayures et aux déformations. Dès lors, le support de prolongateur décrit dans ce document de l'art antérieur risque d'endommager le cintre compte-tenu de l'effort de serrage qu'il exerce directement sur ce dernier.

Par ailleurs, le support de prolongateurs du système de ce document convient pour un montage des prolongateurs à un cintre de section circulaire et constante. Il n'est en revanche pas adapté pour un montage sur un cintre de section non circulaire ou présentant une section non constante.

### Exposé de l'invention

Un but de la présente invention est de proposer une pièce de montage et un système prolongateur comprenant une telle pièce de montage remédiant aux inconvénients précités.

Pour ce faire, l'invention porte sur une pièce de montage pour le montage, sur le cintre d'un vélo, d'un ensemble de prolongateurs comprenant un premier support de prolongateur et un deuxième support de prolongateur, ladite pièce de montage s'étendant selon une direction longitudinale et comprenant :
- une première portion de montage définissant un premier logement configuré pour recevoir une première partie du cintre de façon à ce que ladite première portion de montage entoure au moins partiellement ladite première partie du cintre, ladite première portion de montage étant en outre configurée pour coopérer avec le premier support de prolongateur pour le montage de ce dernier au cintre;
- une deuxième portion de montage distante de la première portion de montage, ladite deuxième portion de montage définissant un deuxième logement configuré pour recevoir une deuxième partie du cintre, distante de la première partie du cintre, de façon à ce que ladite deuxième portion de montage entoure au moins partiellement ladite deuxième partie du cintre, ladite deuxième portion de montage étant en outre configurée pour coopérer avec le deuxième support de prolongateur pour le montage de ce dernier au cintre; et
- au moins une portion de liaison reliant ladite première portion de montage et ladite deuxième portion de montage et s'étendant selon ladite direction longitudinale

L'ensemble de prolongateurs comprend avantageusement un premier prolongateur comprenant un premier accoudoir et/ou un premier tube de prolongateur. Le premier support de prolongateur est avantageusement configuré pour supporter un tel premier prolongateur. L'ensemble de prolongateurs comprend avantageusement un deuxième prolongateur comprenant un deuxième accoudoir et/ou un deuxième tube de prolongateur. Le deuxième support de prolongateur est avantageusement configuré pour supporter un tel deuxième prolongateur. De manière non limitative, le premier support de prolongateur et le deuxième support de prolongateur peuvent former une seule et même pièce ou deux pièces distinctes.

Le cintre du vélo s'étend avantageusement selon une direction principale. La direction longitudinale de la pièce de montage coïncide avantageusement avec la direction principale du cintre. Le cintre comprend avantageusement une première extrémité et une deuxième extrémité opposée à la première extrémité. Le cintre comprend avantageusement une première portion de préhension située au niveau de la première extrémité dudit cintre, et une deuxième portion de préhension située au niveau de la deuxième extrémité du cintre. Le cintre comprend avantageusement une portion centrale située entre les première et deuxième extrémités du cintre. La pièce de montage est avantageusement configurée pour coopérer avec la portion centrale du cintre.

La pièce de montage est avantageusement formée dans un matériau plastique, par exemple en acide polylactique (PLA), en acrylonitrile butadiène styrène (ABS) ou encore en polytéréphtalate d'éthylène-glycol (PETP) ou du polyamide. Elle est obtenue par un procédé classique d'injection mais est préférentiellement obtenue par un procédé d'impression 3D.

La pièce de montage est avantageusement configurée pour être montée de manière amovible au cintre. De préférence, la première portion de montage est configurée pour recevoir, de manière amovible, la première partie du cintre. La deuxième portion de montage est avantageusement configurée pour recevoir, de manière amovible, la deuxième partie du cintre.

Les première et deuxième portions de montage de la pièce de montage sont distinctes et distantes l'une de l'autre. Elles sont séparées par ladite portion de liaison. Les premier et deuxième portions de montage sont avantageusement sensiblement identiques.

De préférence, la première portion de montage est configurée pour entourer une première partie du cintre située au niveau de la portion centrale du cintre. De préférence, la deuxième portion de montage est configurée pour entourer une deuxième partie du cintre située au niveau de la portion centrale du cintre. De préférence, ladite première partie du cintre et ladite deuxième partie du cintre sont situées de part et d'autre d'un plan de symétrie du cintre qui est transversal à la direction principale dudit cintre.

La première portion de montage et la deuxième portion de montage présentent avantageusement chacune une section intérieure qui correspond à la forme respectivement de la première partie du cintre et de la deuxième partie du cintre.

La première portion de montage est avantageusement configurée pour s'étendre entre le premier support de prolongateur et le cintre, lorsque ladite pièce de montage et ledit premier support de prolongateur sont montés au cintre. La deuxième portion de montage est avantageusement configurée pour s'étendre entre le deuxième support de prolongateur et le cintre, lorsque ladite pièce de montage et ledit deuxième support de prolongateur sont montés au cintre.

De préférence, la première portion de montage est configurée pour être entourée au moins partiellement par le premier support de prolongateur. La première portion de montage est avantageusement configurée pour être reçue dans une première cavité du premier support de prolongateur. De préférence, la deuxième portion de montage est configurée pour être entourée au moins partiellement par le deuxième support de prolongateur. La deuxième portion de montage est avantageusement configurée pour être reçue dans une deuxième cavité du deuxième support de prolongateur.

La première portion de montage forme avantageusement un fourreau destiné à recevoir la première partie du cintre. La deuxième portion de montage forme avantageusement un fourreau destiné à recevoir la deuxième partie du cintre.

La première portion de montage et la deuxième portion de montage sont destinées à former chacune une couche intermédiaire protectrice située entre le cintre et les premier et deuxième supports de prolongateur, respectivement. Aussi, la pièce de montage permet de protéger le cintre en évitant que les supports de prolongateurs n'entrent en contact direct avec ce dernier, contrairement aux systèmes de l'art antérieur. Le risque que le cintre soit déformé, rayé ou soumis à tous autres types de dommages liés au montage de l'ensemble de prolongateurs est réduit. Autrement dit, ladite pièce de montage forme une interface de protection entre l'ensemble de prolongateurs et le cintre du vélo. L'ensemble de prolongateurs est alors monté de manière indirecte au cintre, via la pièce de montage.

La pièce de montage forme en outre un adaptateur permettant de monter l'ensemble de prolongateurs à un cintre dont la forme ne correspondrait pas nécessairement à celle de cavités formées dans les premier et deuxième supports de prolongateurs. Elle permet alors de réduire le jeu pouvant exister entre les supports de prolongateurs et le cintre. La pièce de montage permet par exemple le montage de l'ensemble de prolongateurs sur un cintre de forme complexe, sans endommager ce dernier. En particulier, la pièce de montage permet de monter les premier et deuxième supports de prolongateurs à des première et deuxième parties du cintre présentant une section qui n'est pas nécessairement circulaire, par exemple une section ovale. De plus, la première portion de montage et la deuxième portion de montage permettent en outre de monter les premier et deuxième supports de prolongateurs aussi bien à des première et deuxième parties du cintre présentant une section constante ou qu'à des parties du cintre de sections variables.

La pièce de montage permet en outre de monter l'ensemble de prolongateurs sur tous types de cintres, sans qu'il ne soit nécessaire de modifier la conformation dudit cintre ou de la potence du vélo, comme c'est le cas dans le document de l'art antérieur précédemment cité, dans lequel la potence est conformée spécifiquement pour coopérer avec une couronne.

La portion de liaison relie la première portion de montage et la deuxième portion de montage. Elle permet de maintenir un espace constant entre la première portion de montage et la deuxième portion de montage. Aussi, une fois la pièce de montage montée au cintre, la mise en coopération des premier et deuxième supports de prolongateurs avec les première et deuxième portions de montage de la pièce de montage assure un espacement constant, précis et adapté entre les deux supports de prolongateurs, sans qu'il ne soit nécessaire pour l'utilisateur d'ajuster manuellement leur écartement. Autrement dit, la pièce de montage guide l'utilisateur dans le montage de l'ensemble de prolongateurs et assure un bon positionnement relatif des premier et deuxième supports de prolongateur sur le cintre.

La portion de liaison forme avantageusement une bande de matière s'étendant entre la première portion de montage et la deuxième portion de montage. De préférence, la première portion de montage, la deuxième portion de montage et la portion de liaison sont formées dans un même matériau. De préférence, la première portion de montage, la deuxième portion de montage et la portion de liaison forment un ensemble monobloc.

La portion de liaison est avantageusement souple. Elle autorise avantageusement un léger déplacement relatif de la première portion de montage par rapport à la deuxième portion de montage, facilitant le montage de la pièce de montage au cintre. En particulier, la portion de liaison autorise avantageusement un léger décalage entre un premier axe de montage de la première portion de montage et un deuxième axe de montage de la deuxième portion de montage, ou encore une légère inclinaison entre un premier axe de montage de la première portion de montage et un deuxième axe de montage de la deuxième portion de montage.

Avantageusement, considérées selon la direction longitudinale de la pièce de montage, la portion de liaison présente une longueur qui est supérieure à une longueur de la première portion de montage, de préférence qui est supérieure à deux fois la longueur de la première portion de montage, encore de préférence qui est sensiblement égale à trois fois la longueur de la première portion de montage.

De manière non limitative, la pièce de montage peut comprendre une pluralité de portions de liaison reliant la première portion de montage et la deuxième portion de montage.

De préférence, mais de manière non limitative, afin de monter l'ensemble de prolongateurs au cintre du vélo, l'utilisateur monte d'abord la pièce de montage audit cintre, de sorte que la première portion de montage entoure la première partie du cintre et la deuxième portion de montage entoure la deuxième partie du cintre. L'utilisateur monte ensuite le premier prolongateur au cintre en mettant le premier support de prolongateur en coopération avec la première portion de montage de la pièce de montage. La première portion de montage s'étend alors entre le premier support de prolongateur et la première partie du cintre. Il monte également le deuxième prolongateur au cintre en mettant le deuxième support de prolongateur en coopération avec la deuxième portion de montage de la pièce de montage. La deuxième portion de montage s'étend alors entre le deuxième support de prolongateur et la deuxième partie du cintre.

De manière avantageuse, la première portion de montage comprend une première surface extérieure périphérique configurée pour venir en contact avec le premier support de prolongateur et la deuxième portion de montage comprend une deuxième surface extérieure périphérique configurée pour venir en contact avec le deuxième support de prolongateur.

Ladite première surface extérieure périphérique est avantageusement configurée pour venir en contact avec une surface intérieure dudit premier support de prolongateur. Ladite deuxième surface extérieure périphérique est avantageusement configurée pour venir en contact avec une surface intérieure dudit deuxième support de prolongateur.

De manière avantageuse, ladite première portion de montage s'étend selon un premier axe montage, et la deuxième portion de montage s'étend selon un deuxième axe de montage, lesdits premier et deuxième axes de montage étant sensiblement parallèles à ladite direction longitudinale. Les premier et deuxième axes de montage sont avantageusement parallèles entre eux. De préférence, mais de manière non limitative, le premier axe de montage et le deuxième axe de montage sont confondus.

De préférence, le premier logement, formé par la première portion de montage, s'étend selon ledit premier axe de montage. De préférence, le deuxième logement, formé par la deuxième portion de montage, s'étend selon ledit deuxième axe de montage. De préférence, lesdits premier et deuxième logements s'étendent selon ladite direction longitudinale de la pièce de montage.

De préférence, le premier axe de montage et le deuxième axe de montage sont confondus avec un axe principal selon lequel s'étend ladite pièce de montage. De préférence, les première et deuxième portions de montage sont coaxiales.

De préférence, la première portion de montage et/ou la deuxième portion de montage présente(nt) la forme d'un profilé. De préférence, ladite première portion de montage et/ou la deuxième portion de montage est/sont creuse(s).

De préférence, ladite première portion de montage et/ou la deuxième portion de montage présente(nt) une forme générale tubulaire. On entend par là que la première portion de montage et/ou la deuxième portion de montage est/sont creuse(s) et présente(nt) une section sensiblement constante. La forme tubulaire n'est pas limitée à une section de forme circulaire. Cette forme tubulaire permet de former lesdits premier et deuxième logements. Une telle forme est particulièrement adaptée pour permettre aux première et deuxième portions de montage d'entourer le cintre du vélo. Ceci améliore la coopération entre la pièce de montage et ledit cintre.

De manière non limitative, la première portion de montage peut présenter une section générale de forme circulaire, ovale, carrée ou encore hexagonale. De manière non limitative, la deuxième portion de montage peut présenter une section générale de forme circulaire, ovale, carrée ou encore hexagonale.

La forme et la section des première et deuxième portions de montage sont avantageusement choisies en fonction de la forme du cintre.

De manière avantageuse, la première portion de montage et/ou la deuxième portion de montage présente(nt) la forme d'un manchon cylindrique. De préférence, la première portion de montage présente la forme d'un manchon cylindrique s'étendant selon le premier axe de montage et la deuxième portion de montage présente la forme d'un manchon cylindrique s'étendant selon le deuxième axe de montage.

De préférence, la première portion de montage présente une section intérieure dont la forme correspond à la forme de la section de la première partie du cintre sur laquelle elle est destinée à être montée. De préférence, la deuxième portion de montage présente une section intérieure dont la forme correspondant à la forme de la section de la deuxième partie du cintre sur laquelle elle est destinée à être montée.

De préférence, la première portion de montage présente une section intérieure de forme ovale ou circulaire, et la première portion de montage présente une section extérieure de forme ovale ou circulaire.

La section intérieure de la première portion de montage est avantageusement définie par une surface intérieure de ladite première portion de montage. La section extérieure de la première portion de montage est avantageusement définie par une surface extérieure périphérique de ladite première portion de montage.

La forme circulaire ou ovale de la section intérieure de la première portion de montage est particulièrement adaptée pour le montage aux cintres de vélos traditionnels qui présente généralement une section de forme ovale ou cylindrique. La forme circulaire ou ovale de la section extérieure de la première portion de montage est particulièrement adaptée pour permettre la coopération avec une première cavité du premier support de prolongateur qui est de préférence de section circulaire ou ovale également.

De préférence, la deuxième portion de montage présente une section intérieure de forme ovale ou circulaire, et la deuxième portion de montage présente une section extérieure de forme ovale ou circulaire.

Selon une première variante avantageuse, la première portion de montage présente une section intérieure dont la forme est différente de la forme d'une section extérieure de ladite première portion de montage. La première portion de montage joue alors le rôle d'un adaptateur permettant de monter un premier support de prolongateur à un cintre ayant une section de forme différente celle de la section d'une première cavité de montage dudit premier support de prolongateur. A titre d'exemple, la première portion de montage peut présenter une section extérieure de forme ovale afin de s'adapter à une première cavité ayant une section de forme ovale formée par le premier support de prolongateur, et une section intérieure de forme circulaire pour s'adapter à un cintre de section circulaire. De préférence, la deuxième portion de montage présente une section intérieure dont la forme est différente de la forme d'une section extérieure de ladite deuxième portion de montage.

Selon une autre variante avantageuse, la première portion de montage présente une section intérieure dont la forme est sensiblement la même que la forme d'une section extérieure de ladite première portion de montage. Un intérêt est alors de faciliter la fabrication de la pièce de montage lorsque le cintre et la première cavité du premier support de prolongateur destinée recevoir la première portion de montage, présentent une forme similaire.

De préférence, ladite première portion de montage s'étend selon un premier axe de montage et une fente longitudinale, s'étendant parallèlement audit premier axe de montage, est ménagée sur toute la longueur de ladite première portion de montage, considérée selon ledit premier axe de montage. Ladite fente longitudinale permet de déformer la première portion de montage. Cette fente longitudinale permet d'abord de pouvoir ouvrir et écarter le tube formé par la première portion de montage, afin de pouvoir introduire le cintre du vélo dans le premier logement, via ladite fente longitudinale. Cette fente longitudinale facilite donc le montage de la pièce de montage au cintre. Ladite fente longitudinale permet en outre de resserrer et fermer la première portion de montage lorsque cette dernière est soumise à un effort de serrage exercé par les premier et deuxième supports de prolongateurs. La première portion de montage peut alors épouser la forme du cintre et s'y conformer.

La fente longitudinale définit avantageusement deux ailes pour la première portion de montage qui peuvent être écartées l'une de l'autre. De préférence, la première portion de montage est formée dans un matériau suffisamment souple pour permettre son écartement.

De manière non limitative, ladite fente longitudinale peut être formée sur toute la longueur de ladite pièce de montage ou uniquement sur la longueur de la première portion de montage.

La première portion de montage présente avantageusement la forme d'un tube, ou d'un manchon, fendu longitudinalement. Avantageusement, la première portion de montage présente une section en forme de « C ».

Avantageusement, la deuxième portion de montage présente également une fente longitudinale. La deuxième portion de montage présente avantageusement la forme d'un tube, ou d'un manchon, fendu longitudinalement.

Préférentiellement, la pièce de montage comprend un manchon de liaison comprenant ladite portion de liaison et reliant la première portion de montage et la deuxième portion de montage, un évidement étant ménagé dans ledit manchon de liaison de sorte à définir ladite portion de liaison reliant les première et deuxième portions de montage. La portion de liaison forme une partie du manchon de liaison. Elle constitue la partie non évidée dudit manchon de liaison. Ladite portion de liaison est légèrement courbe ou arquée. La section de ladite portion de liaison forme un arc centré sur un axe principal de la pièce de montage. L'évidement ménagé dans ledit manchon de liaison permet de ménager un passage pour la potence du vélo.

De préférence, ledit manchon de liaison présente un diamètre sensiblement égal, ou légèrement inférieur à un diamètre de la première portion de montage.

De manière avantageuse, la pièce de montage comprend en outre une patte de fixation faisant saillie depuis ladite portion de liaison, transversalement à ladite direction longitudinale, ladite patte de fixation étant configurée pour coopérer avec un élément de fixation, par exemple une vis, pour la fixation de la pièce de montage au cintre du vélo. Ladite patte de fixation permet de fixer la pièce de montage au cintre de manière à éviter qu'elle ne pivote ou coulisse le long du cintre. La fixation de l'ensemble de prolongateurs sur le cintre est améliorée. La patte de fixation permet en outre de positionner correctement la pièce de montage par rapport au cintre, et notamment de la centrer, ce qui assure indirectement le bon positionnement des prolongateurs. Ce bon positionnement de la pièce de montage permet, dans le cas où le cintre présente une section variable, de s'assurer que la première portion de montage et la deuxième portion de montage présentent une section intérieure dont la forme est sensiblement la même que les parties du cintre sur lesquelles elles doivent se monter.

Ladite patte de fixation comprend avantageusement au moins un orifice traversant configuré pour recevoir ledit élément de fixation. L'élément de fixation coopère avantageusement avec un trou de fixation formé dans le cintre, par exemple un pas de vis. Le pas de vis peut être un pas de vis normalement destiné au montage d'un support de compteur ou d'un système GPS pour le vélo.

De préférence, ladite patte de fixation s'étend tangentiellement par rapport audit manchon de liaison. De préférence, ladite patte de fixation s'étend depuis une portion médiane de ladite portion de liaison de sorte que ladite patte de fixation est agencée pour permettre le centrage de la pièce de montage par rapport au cintre.

Avantageusement, la première portion de montage présente une surface extérieure périphérique et un premier bord latéral, la première portion de montage comprenant en outre au moins une nervure faisant saillie par rapport à ladite surface extérieure périphérique et s'étendant sur un pourtour de ladite première portion de montage, à proximité dudit premier bord latéral. Ladite nervure permet de bloquer le coulissement axial du premier support de prolongateur par rapport à la première portion de montage, selon la direction longitudinale, dans au moins un sens. Ceci permet de maintenir la coopération entre le premier support de prolongateur et la première portion de montage. Le premier bord latéral est situé en une extrémité de la première portion de montage.

De préférence, la première portion de montage comprend une première nervure et une deuxième nervure faisant chacune saillie par rapport à la surface extérieure périphérique de la première portion de montage et distantes l'une de l'autre considérées selon ladite direction longitudinale. Lesdites première et deuxième nervures s'étendent alors avantageusement de part et d'autre du premier support de prolongateur lorsque ce dernier coopère avec la première portion de montage Un intérêt est de bloquer le coulissement du premier support de prolongateur par rapport à la première portion de montage selon la direction longitudinale, dans les deux sens.

De préférence, mais de manière non limitative, la deuxième portion de montage comprend avantageusement au moins une nervure.

L'invention porte par ailleurs sur un système prolongateur pour vélo comprenant un cintre ayant une première partie et une deuxième partie, ledit système prolongateur comprenant :
- une pièce de montage telle que décrite précédemment; et
- un ensemble de prolongateurs comprenant :
   un premier prolongateur comprenant un premier tube de prolongateur et/ou un premier accoudoir;
   un premier support de prolongateur solidaire du premier prolongateur, le premier support de prolongateur présentant une première cavité destinée à recevoir la première portion de montage de la pièce de montage afin de monter ledit premier prolongateur à la première partie du cintre du vélo;
   un deuxième prolongateur comprenant un deuxième tube de prolongateur et/ou un deuxième accoudoir;
   un deuxième support de prolongateur solidaire du deuxième prolongateur et présentant une deuxième cavité destinée à recevoir la deuxième portion de montage de la pièce de montage afin de monter ledit deuxième prolongateur à la deuxième partie du cintre du vélo.

Le premier support de prolongateur est configuré pour entourer la première portion de montage. Le deuxième support de prolongateur est configuré pour entourer la deuxième portion de montage. Le premier support de prolongateur permet le montage du premier prolongateur au cintre. Le deuxième support de prolongateur permet le montage du deuxième prolongateur au cintre. Les premier et deuxième supports de prolongateur sont avantageusement sensiblement identiques. De manière non limitative, le premier prolongateur et le deuxième prolongateur peuvent être solidaires l'un de l'autre.

La première cavité et/ou la deuxième cavité présente(nt) avantageusement une forme cylindrique. De manière non limitative, ladite première cavité peut présenter une section de forme circulaire, ovale, carrée ou encore hexagonale. Il en est de même pour la deuxième cavité. De préférence, la première portion de montage de la pièce de montage présente une section extérieure dont la forme correspond à la forme de ladite première cavité. De préférence, la deuxième portion de montage de la pièce de montage présente une section extérieure dont la forme correspond à la forme de ladite deuxième cavité.

De préférence, les premier et deuxième supports de prolongateurs sont configurés pour s'étendre au-dessus du cintre. De préférence, les premier et deuxième prolongateurs sont configurés pour s'étendre au-dessus du cintre.

De préférence, ledit premier support de prolongateur comprend une première base de montage définissant ladite première cavité, ladite première base de montage étant apte à prendre au moins une configuration de serrage dans laquelle elle enserre ladite première portion de montage. Cette configuration de serrage permet de maintenir le premier prolongateur fixement par rapport au cintre, de sorte qu'il ne peut pas pivoter ni coulisser par rapport audit cintre. Dans cette configuration de serrage les dimensions de la première cavité sont réduites.

De préférence, mais de manière non limitative, ladite première base de montage est apte à prendre une configuration de repos dans laquelle elle n'enserre pas la première portion de montage. Un intérêt est de pouvoir ajuster le positionnement ou l'inclinaison du premier prolongateur par rapport au cintre.

De préférence, ledit deuxième support de prolongateur comprend une deuxième base de montage définissant ladite deuxième cavité, ladite deuxième base de montage étant apte à prendre au moins une configuration de serrage dans laquelle elle enserre ladite deuxième portion de montage. La deuxième base de montage est avantageusement sensiblement identique à la première base de montage.

Avantageusement, ladite première base de montage comprend un corps principal et une partie de serrage coopérant avec le corps principal, le corps principal et la partie de serrage définissant ensemble ladite première cavité, la première base de montage comprenant des moyens de serrage configurés pour placer la première base de montage dans la configuration de serrage.

De manière non limitative, le corps principal et la partie de serrage peuvent former une seule et même pièce ou deux pièces distinctes. De manière non limitative, ladite partie de serrage peut être connectée au corps principal

Le corps principal présente avantageusement un premier renfoncement définissant une première partie de ladite première cavité. Ladite partie de serrage présente avantageusement un deuxième renfoncement définissant une deuxième partie de ladite première cavité. De préférence, lesdits premier et deuxième renfoncements présentent chacun une forme sensiblement hémicylindrique.

Ladite partie de serrage présente avantageusement la forme d'une attache ou d'une lanière.

De manière non limitative, les moyens de serrage peuvent être une pièce rapportée. Les moyens de serrage coopèrent avantageusement avec le corps principal et la partie de serrage pour placer la base de montage dans ladite configuration de serrage.

Alternativement, le corps principal et/ou la partie de serrage peuvent comprendre les moyens de serrage.

De manière non limitative, lesdits moyens de serrage peuvent comprendre au moins une vis de serrage coopérant avec le corps principal et avec la partie de serrage afin de placer la base de montage dans la configuration de serrage. Ladite vis de serrage exerce alors un effort de serrage sur le corps principal et sur la partie de serrage de la base de montage. Ladite vis de serrage permet en outre d'ajuster l'effort de serrage. La vis de serrage coopère avantageusement avec un pas de vis formé dans le corps principal ou dans la partie de serrage.

De manière non limitative, les moyens de serrage peuvent comprendre deux vis de serrage.

De manière avantageuse, le corps principal de la première base de montage comprend un ergot et ladite partie de serrage de la première base de montage comprend un orifice configuré pour recevoir ledit ergot de manière à placer la première base de montage dans la configuration de serrage. Un intérêt est de faciliter le montage et le démontage du premier support de prolongateur par rapport au cintre du vélo, cette action pouvant être réalisée manuellement, sans outils.

On comprend que les moyens de serrage comprennent ledit ergot et ledit orifice formé dans la partie de serrage. Sans sortir du cadre de l'invention, ladite partie de serrage pourrait comprendre ledit ergot tandis que ledit orifice pourrait être formé dans le corps principal.

Préférentiellement, ledit premier support de prolongateur comprend en outre au moins une première entretoise solidaire de ladite première base de montage et s'étendant entre ladite première base de montage et le premier prolongateur. Cette entretoise permet de surélever et/ou d'incliner le premier prolongateur par rapport au cintre. Différentes hauteurs d'entretoises peuvent être utilisées selon la morphologie du cycliste. Une telle entretoise est également appelée « spacer » en langue anglaise. De manière non limitative, le premier support de prolongateur peut comprendre une combinaison de différentes entretoises, et notamment une ou plusieurs entretoise(s) permettant de surélever le premier prolongateur et une ou plusieurs entretoise(s) permettant d'ajuster l'inclinaison du premier prolongateur par rapport au cintre.

De préférence, la première portion de montage de la pièce de montage présente une surface extérieure périphérique depuis laquelle fait saillie un plot, le premier support de prolongateur présentant une creusure configurée pour recevoir ledit plot lorsque la première cavité du premier support de prolongateur reçoit la première portion de montage de la pièce de montage, afin de bloquer la rotation du premier support de prolongateur par rapport à ladite première portion de montage. Ceci permet de maintenir l'inclinaison du premier prolongateur par rapport au cintre.

Ladite creusure est avantageusement formée dans une surface intérieure de la première base de montage. La creusure est avantageusement formée dans le corps principal de la première base de montage. Sans sortir du cadre de l'invention, la creusure pourrait être formée dans la surface extérieure périphérique de la première portion de montage tandis que le plot pourrait faire saillie depuis le premier support de prolongateur.

L'invention porte également sur un vélo comprenant un cintre présentant une première partie et une deuxième partie, le vélo comprenant en outre un système prolongateur tel que décrit précédemment, ladite pièce de montage coopérant avec ledit cintre de sorte que ladite première portion de montage entoure au moins partiellement ladite première partie du cintre et ladite deuxième portion de montage entoure au moins partiellement ladite deuxième partie du cintre, le premier support de prolongateur coopérant avec la première portion de montage de la pièce de montage pour le montage dudit premier prolongateur à la première partie du cintre, ladite première portion de montage s'étendant entre le premier support de prolongateur et la première partie du cintre, le deuxième support de prolongateur coopérant avec la deuxième portion de montage de la pièce de montage pour le montage du deuxième prolongateur à la deuxième partie du cintre, deuxième première portion de montage s'étendant entre le deuxième support de prolongateur et la deuxième partie du cintre.

De manière avantageuse, ledit cintre comprend une portion centrale dans laquelle est ménagé un trou de fixation, la pièce de montage comprend en outre une patte de fixation faisant saillie depuis ladite portion de liaison, transversalement à ladite direction longitudinale, le vélo comprenant en outre un élément de fixation, par exemple une vis, configuré pour coopérer avec la patte de fixation ainsi qu'avec ledit trou de fixation de manière à fixer ladite pièce de montage au cintre.

Ledit trou de fixation peut être un trou destiné au montage d'un compteur ou d'un système GPS pour le vélo. Ledit trou de fixation comprend avantageusement un pas de vis.

Avantageusement, ladite patte de fixation s'étend depuis une portion médiane de ladite portion de liaison de sorte que ladite patte de fixation est agencée pour permettre le centrage de la pièce de montage par rapport au cintre. Autrement dit, ladite patte de fixation s'étend depuis une portion de la portion de liaison située sensiblement à la moitié de la distance séparant les première et deuxième portions de montage. Cette portion médiane est située sensiblement à équidistance des première et deuxième portions de montage.

De préférence, le trou de fixation est situé en un point milieu du cintre, situé à équidistance des extrémités dudit cintre. Il est avantageusement situé sous le cintre.

### Brève description des dessins

Les dessins annexés sont schématiques et visent avant tout à illustrer les principes de l'exposé.

L'invention sera mieux comprise à la lecture de la description qui suit d'un mode de réalisation de l'invention donné à titre d'exemple non limitatif, en référence aux dessins annexés, sur lesquels :
[Fig. 1] La figure 1 est une vue en perspective d'un mode de réalisation d'une pièce de montage selon l'invention;
[Fig. 2] La figure 2 illustre une vue de côté de la pièce de montage de la figure 1 ;
[Fig. 3] La figure 3 illustre une vue arrière de la pièce de montage de la figure 1;
[Fig. 4] La figure 4 montre un système prolongateur selon l'invention monté au cintre d'un vélo et comprenant la pièce de montage de la figure 1 ;
[Fig. 5] La figure 5 est une vue zoomée sur les supports de prolongateurs du système prolongateur de la figure 4 ;
[Fig. 6] La figure 6 illustre le corps principal et la partie de serrage de la première base de montage du système prolongateur de la figure 4 ; et
[Fig. 7] La figure 7 est une vue en coupe, de côté, du système prolongateur de la figure 4, zoomée sur le premier support de prolongateur.

### Description des modes de réalisation

L'invention porte sur une pièce de montage pour le montage d'un ensemble de prolongateurs sur le cintre d'un vélo. L'invention porte en outre sur un système prolongateur comprenant une telle pièce de montage ainsi qu'un ensemble de prolongateurs, destiné à être monté audit cintre du vélo.

Afin de rendre plus concret l'exposé, un mode de réalisation d'une pièce de montage pour le montage d'un ensemble de prolongateurs, ainsi que d'un système prolongateur selon l'invention est décrit en détails ci-après, en référence aux dessins annexés. Il est rappelé que l'invention ne se limite pas à ces exemples.

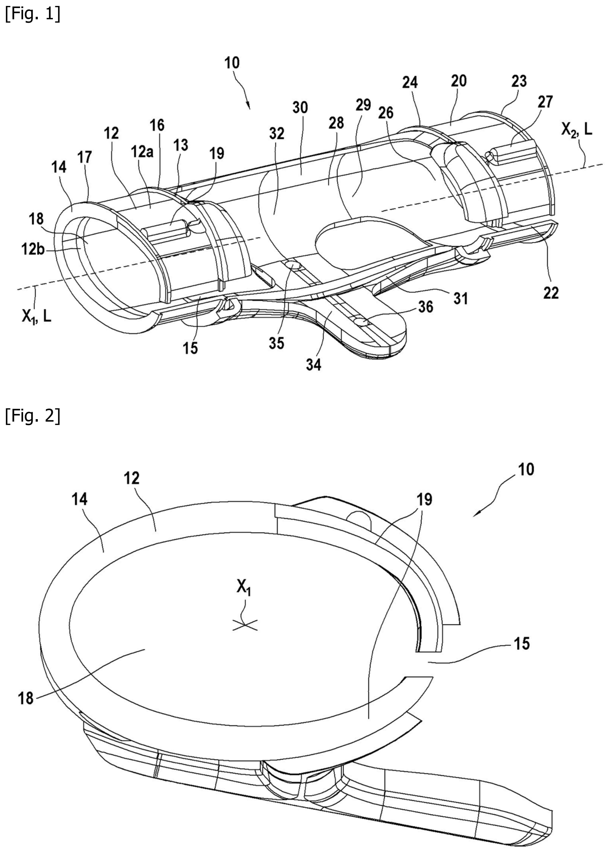

Les figures 1 à 3 illustrent un mode de réalisation non limitatif d'une pièce de montage **10** selon l'invention, pour le montage d'un ensemble de prolongateurs **38** au cintre du vélo.

La figure **1** illustre la pièce de montage **10** en vue en perspective. La pièce de montage **10** s'étend selon une direction longitudinale **L.** Elle est formée dans un matériau plastique rigide mais légèrement déformable, par exemple en acide polylactique (PLA), en acrylonitrile butadiène styrène (ABS), en polyamide ou encore en polytéréphtalate d'éthylène-glycol (PETP). Elle est obtenue par un procédé d'injection classique et préférentiellement par un procédé d'impression 3D. La pièce de montage **10** comprend une première portion de montage **12,** une deuxième portion de montage **20,** une première portion de liaison **30** et une deuxième portion de liaison **31.**

La première portion de montage **12** présente la forme d'un manchon cylindrique s'étendant selon un premier axe de montage **X₁** qui est ici confondu avec la direction longitudinale **L.** Dans cet exemple non limitatif, la première portion de montage **12** est de forme tubulaire creuse et présente une section générale ovale correspondant à la forme de la section du cintre **C** du vélo.

La première portion de montage **12** présente une première surface extérieure périphérique **12a** définissant une section extérieure pour ladite première portion de montage. Cette section extérieure est ici de forme ovale. La première portion de montage **12** présente en outre une surface intérieure **12b** définissant une section intérieure pour ladite première portion de montage. Dans cet exemple non limitatif, cette section intérieure est également de forme ovale, de sorte que les sections intérieure et extérieure de la première portion de montage **12** sont de forme similaire. Sans sortir du cadre de l'invention, les sections intérieure et extérieure de la première portion de montage pourraient présenter des formes différentes.

La première portion de montage **12,** et notamment sa surface intérieure, définit un premier logement **18,** de forme cylindrique, de section ovale, situé à l'intérieur de ladite première portion de montage. Ce premier logement **18** est configuré pour recevoir une première partie du cintre du vélo. Il s'étend selon le premier axe de montage **X₁.**

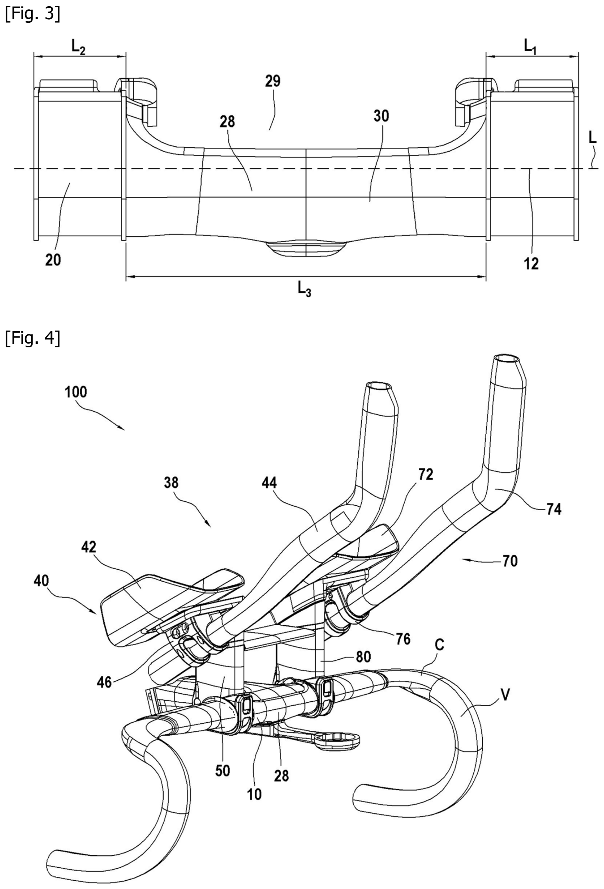

Sur la vue arrière de la pièce de montage **10** illustrée en la figure **3****,** on constate que la première portion de montage **12** présente une longueur **L₁** considérée selon la direction longitudinale **L.** La première portion de montage **12** présente en outre une fente longitudinale **15** particulièrement visible sur la vue de côté de la figure **2****.** Cette fente longitudinale **15** s'étend selon toute la longueur **L₁** de la première portion de montage, de sorte que ladite première portion de montage **12** forme un manchon ouvert. Autrement dit, ladite première portion de montage présente une section en forme de « C ». La fente longitudinale rend la première portion de manchon déformable. Un intérêt est de permettre d'écarter et ouvrir le manchon afin de pouvoir introduire le cintre dans le premier logement **18** via ladite fente longitudinale **15.** Un autre intérêt est de pouvoir resserrer et fermer la première portion de montage **12** afin qu'elle épouse la forme de la première partie du cintre à laquelle elle est montée.

En se référant de nouveau à la figure 1, on constate que la première portion de montage **12** présente en outre un premier bord latéral **13** dirigé vers la deuxième portion de montage **20** et un deuxième bord latéral **14** opposé au premier bord latéral **13.** Une première nervure **16** fait saillie depuis la première surface extérieure périphérique **12a.** Cette première nervure **16** est située au niveau du premier bord latéral **13.** La première nervure **16** s'étend sur le pourtour de la première portion de montage, dans un plan perpendiculaire à la direction longitudinale **L.** Une deuxième nervure **17,** distante de la première nervure **16,** fait également saillie depuis la première surface extérieure périphérique **12a.** Cette deuxième nervure **17** est située au niveau du deuxième bord latéral **14** de la première portion de montage. La deuxième nervure **17** s'étend sur le pourtour de la première portion de montage, dans un autre plan perpendiculaire à la direction longitudinale **L.**

Par ailleurs, un premier plot **19** fait saillie depuis la première surface extérieure périphérique **12a** de la première portion de montage.

La deuxième portion de montage **20** est sensiblement identique à la première portion de montage **12** de sorte qu'elle ne sera pas décrite en détails. Elle présente également la forme d'un tube ouvert, ou encore la forme d'un manchon cylindrique ouvert, de section ovale en forme de « C ». Elle présente une deuxième surface extérieure périphérique et comprend une fente longitudinale **22** s'étendant parallèlement audit deuxième axe de montage **X₂**. En outre, cette deuxième portion de montage **20** comprend également deux nervures **23,24** distantes l'une de l'autre et faisant saillie depuis ladite deuxième surface extérieure périphérique. Elle comprend un deuxième plot **27** faisant saillie depuis la deuxième surface extérieure périphérique.

Tel qu'illustré en figure **3****,** la deuxième portion de montage **20** présente une longueur **L₂**, considérée selon la direction longitudinale **L,** sensiblement égale à la longueur **L₁** de la première portion de montage **12.** La deuxième portion de montage **20** définit un deuxième logement **26,** de forme cylindrique, situé à l'intérieur de ladite deuxième portion de montage **20.** Ce deuxième logement **26** est configuré pour recevoir une deuxième partie **C₂** du cintre du vélo.

En se référant de nouveau à la figure **1****,** on constate que la pièce de montage **10** comprend par ailleurs un manchon de liaison **28** reliant la première portion de montage **12** et la deuxième portion de montage **20.** Ce manchon de liaison **28** est de forme cylindrique et présente une section ovale sensiblement identique à la section des première et deuxième portions de montage **12,20.** Il s'étend selon la direction longitudinale **L.** Ce manchon de liaison **28** présente un évidement **29** définissant une portion de liaison **30.** Cette portion de liaison **30** relie la première portion de montage **12** et la deuxième portion de montage **20** et s'étend selon la direction longitudinale **L.** La portion de liaison **30** forme une partie du manchon de liaison et est courbe. Elle présente une section formant un arc.

La portion de liaison **30** présente une longueur **L₃**, considérée selon la direction longitudinale **L,** qui est sensiblement égale à trois fois la longueur **L₁** de la première portion de montage **12.**

La portion de liaison **30** présente une partie médiane **32** située à mi-distance entre la première portion de montage **12** et la deuxième portion de montage **20.** La pièce de montage comprend une patte de fixation **34** s'étendant depuis ladite partie médiane **32** de la portion de liaison. La patte de fixation **34** s'étend transversalement à la direction longitudinale **L** et tangentiellement au manchon de liaison **28.** Elle comprend un premier orifice traversant **35** et un deuxième orifice traversant **36** distants l'un de l'autre.

La pièce de montage présente un plan de symétrie qui est perpendiculaire à la direction longitudinale **L.**

La figure **4** illustre un mode de réalisation non-limitatif d'un système prolongateur **100** selon l'invention, comprenant un ensemble de prolongateurs **38** monté au cintre **C** d'un vélo **V,** ainsi qu'une pièce de montage **10** telle qu'illustrée en figures 1 à 3**.**

L'ensemble de prolongateurs **38** comprend un premier prolongateur **40** ainsi qu'un premier support de prolongateur **50** pour le montage du premier prolongateur **40** au cintre **C** du vélo **V.** Le premier prolongateur **40** comprend un premier accoudoir **42** et un premier tube de prolongateur **44** solidaire du premier accoudoir **42.** Plus précisément, le premier tube de prolongateur **44** est fixé sous le premier accoudoir par l'intermédiaire d'une première pièce de solidarisation **46.** L'ensemble de prolongateurs **38** comprend également un deuxième prolongateur **70** ainsi qu'un deuxième support de prolongateur **80** pour le montage du deuxième prolongateur **70** au cintre **C** du vélo **V.** Le deuxième prolongateur **70** comprend un deuxième accoudoir **72** et un deuxième tube de prolongateur **74** solidaire du premier accoudoir **72.** Plus précisément, le deuxième tube de prolongateur **74** est fixé sous le deuxième accoudoir par l'intermédiaire d'une deuxième pièce de solidarisation **76.**

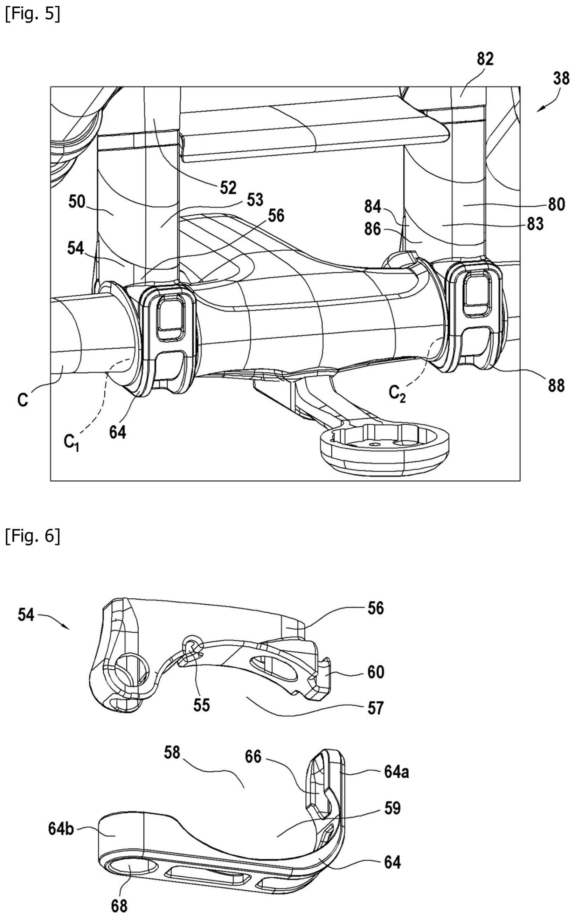

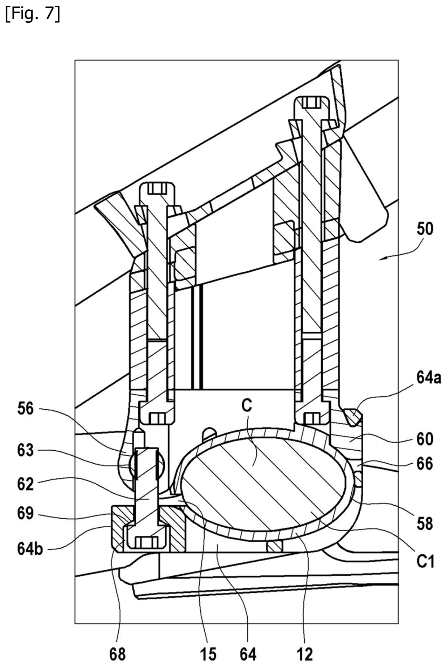

La figure **5** est une vue zoomée sur les premier et deuxième supports de prolongateurs **50,80.** Sur cette figure, on constate que le premier support de prolongateur **50** comprend une première entretoise **52** permettant d'ajuster l'inclinaison du premier prolongateur **40** par rapport au cintre. Le premier support de prolongateur comprend en outre une deuxième entretoise **53** permettant de surélever le premier prolongateur **40.** La première entretoise **52** est fixée à la deuxième entretoise **53** via deux vis visibles sur la vue en coupe de la figure **7****.** Le premier support de prolongateur **50** comprend en outre une première base de montage **54** à laquelle est fixée la deuxième entretoise **53,** via deux vis. La première base de montage **54** comprend un corps principal **56** et une partie de serrage **64** configurée pour coopérer avec ledit corps principal **56.**

Le corps principal **56** et la partie de serrage **64** de la première base de montage **54** sont illustrés isolément en figure **6****.** Le corps principal **56** est formé en matériau aluminium. Il présente la forme d'un demi-manchon. Il présente un premier renfoncement définissant une première partie de cavité hémicylindrique **57.** Le corps principal comprend un ergot **60** en son extrémité. Il présente en outre une creusure **55** formée dans sa surface intérieure, configurée pour recevoir le plot **19** de la première portion de montage **12** de la pièce de montage **10.**

La partie de serrage **64** de la première base de montage **54** présente la forme d'une attache ou encore d'une lanière. Elle présente également un renfoncement définissant une deuxième partie de cavité hémicylindrique **59.** La partie de serrage **64** présente une première partie d'extrémité **64a** et une deuxième partie d'extrémité **64b.** Un orifice **66** traversant est ménagé dans la première partie d'extrémité **64a,** de sorte qu'il débouche dans le renfoncement formé par la partie de serrage. Une lumière traversante **68** est ménagée dans la deuxième partie d'extrémité **64b** de la partie de serrage **64.** La deuxième partie d'extrémité **64b** de la partie de serrage présente en outre un épaulement intérieur **69** visible sur la vue en coupe du système prolongateur illustrée en figure **7****.**

Le premier support de prolongateur **50** comprend une vis de serrage **62,** constituant un moyen de serrage, reçue dans la lumière traversante **68** de la partie de serrage **64** et présentant une tête venant en appui sur l'épaulement intérieur **69.** La vis de serrage **62** est configurée pour coopérer avec un pas de vis **63** formé dans le corps principal **56.** Comme on peut le voir sur cette figure **7****,** la vis de serrage **62** permet de réaliser l'assemblage entre le corps principal **56** et la partie de serrage **64** de la première base de montage **54.** Le corps principal et la partie de serrage de la première base de montage **54** définissent ensemble une première cavité **58** de forme tubulaire cylindrique, de section ovale. Comme on le constate sur la figure **7****,** la section extérieure de la première portion de montage **12** présente une forme sensiblement identique à la forme de la section de ladite première cavité **58.**

Le deuxième support de prolongateur **80** est similaire au premier support de prolongateur, comme on peut le voir en figure **5****.** Aussi, il comprend également une première entretoise **82** et une deuxième entretoise **83.** Il comprend en outre une deuxième base de montage **84** à laquelle est fixée ladite deuxième entretoise. La deuxième base de montage **84** comprend également un corps principal **86** et une partie de serrage **88** configurée pour coopérer avec ledit corps principal **86.** Les premier et deuxième supports de prolongateurs **50,80** sont reliés entre eux par l'intermédiaire d'une traverse **90** formant un pont entre les deuxième entretoises **53,83** desdits supports de prolongateurs.

Pour monter l'ensemble de prolongateurs **38** au cintre **C** du vélo **V,** l'utilisateur monte d'abord la pièce de montage **10** audit cintre. Pour ce faire, il convient d'écarter les première et deuxième portions de montage **12,20** de manière à introduire le cintre dans les premier et deuxième logements **18,26,** via les fentes longitudinales **15,22.** La première portion de montage **12** entoure alors une première partie **C₁** du cintre **C.** La deuxième portion de montage **20** entoure une deuxième partie **C₂** du cintre **C** distante de la première partie **C₁**. Ces première et deuxième partie **C₁,C₂** du cintre **C** sont situées au niveau d'une portion centrale du cintre, de part et d'autre d'un plan de symétrie pour le cintre. La surface intérieure **12b** des première et deuxième portions de montage **12,20** vient en contact avec le cintre et épouse la forme de ce dernier.

La potence du vélo s'étend via l'évidement formé dans le manchon de liaison de la pièce de montage **10.**

La pièce de montage **10** est fixée au cintre au moyen d'un élément de fixation, par exemple une vis de fixation. Ladite vis de fixation est mise en coopération avec un trou de fixation comprenant un pas de vis et formé sous le cintre **C,** de sorte qu'elle traverse la patte de fixation **34** via l'un des orifices traversant **35,36.** Cette fixation permet d'éviter que la pièce de montage **10** ne se déplace par rapport au cintre tout en assurant un bon positionnement et un bon centrage de cette dernière par rapport au cintre **C.** Ce pas de vis peut être un pas de vis destiné au montage d'un compteur ou d'un système GPS pour le vélo.

L'utilisateur monte ensuite l'ensemble de prolongateur **38** au cintre en mettant en coopération les premier et deuxième supports de prolongateurs **50,80** avec la pièce de montage **10.** Pour ce faire, il positionne la première portion de montage **12** de la pièce de montage dans la première cavité **58** définie par la première base de montage **54** du premier support de prolongateur **50.** L'utilisateur ajuste manuellement l'inclinaison du premier prolongateur **40** par rapport au cintre.

Lorsque le premier prolongateur est correctement positionné, l'utilisateur met la partie de serrage **64** de la première base de montage **54** en coopération avec le corps principal **56** de la première base de montage, de sorte que l'orifice **66** de la partie de serrage **64** reçoit l'ergot **60,** assurant ainsi le serrage de la première portion de montage **12.** La première base de montage **54** est alors dans une configuration de serrage dans laquelle elle entoure et enserre ladite première portion de montage **12** et indirectement la première partie **C₁** du cintre C. La première portion de serrage **12** s'étend entre la première partie **C₁** du cintre et la première base de montage **54** du premier support de prolongateur **50.**

La première base de montage coopère alors avec une partie de la première portion de montage **12** située entre les première et deuxième nervures **16,17,** de sorte que le coulissement du premier support de prolongateur **50** par rapport au cintre est empêché. En outre, la creusure **55** formée dans le corps principal **56** de la première base de montage **54** reçoit le plot **19** de la première portion de montage **12** de la pièce de montage, de manière à bloquer le pivotement du premier support de prolongateur **50** par rapport au cintre. Le premier support de prolongateur **50,** et donc le premier prolongateur **40,** sont alors fixes par rapport au cintre.

L'utilisateur répète ces mêmes opérations de manière à fixer le deuxième support de prolongateur **80** et donc le deuxième prolongateur **70** par rapport à la deuxième partie **C₂** du cintre **C.** La deuxième base de montage **84** est alors dans une configuration de serrage dans laquelle elle entoure et enserre ladite deuxième portion de montage **20** et indirectement la deuxième partie **C₂** du cintre **C.** La deuxième portion de serrage **20** alors entre la deuxième partie **C₂** du cintre et la deuxième base de montage **84** du deuxième support de prolongateur **80.** Les deux prolongateurs **40,70** sont alors fixes et centrés par rapport au cintre, tel qu'illustré en figure **4****.** La pièce de montage **10** selon l'invention forme alors une pièce intermédiaire permettant de protéger le cintre, en évitant que le premier support de prolongateur **50** et le deuxième support de prolongateur **80** n'entrent en contact direct avec ledit cintre.

L'ensemble de prolongateurs **38** peut être démonté par rapport au cintre en exerçant un effort sur les parties de serrage **64,88** des première et deuxième bases de montage **54,84,** afin d'extraire les ergots **60** des orifices **66.** Les première et deuxième bases de montage sont alors dans une configuration de repos dans laquelle elles n'enserrent pas les première et deuxième portions de montage **12,20.** Les supports de prolongateurs **50,80** peuvent alors être démontés. La coopération entre la pièce de montage **10** et le cintre **C** peut ensuite être interrompue en démontant également les première et deuxième portions de montage **12,20** par rapport au cintre, via les fentes longitudinales **15,22.**

## Revendications

1. Pièce de montage (10) pour le montage, sur le cintre (C) d'un vélo (V), d'un ensemble de prolongateurs (38) comprenant un premier support de prolongateur (50) et un deuxième support de prolongateur (80), ladite pièce de montage s'étendant selon une direction longitudinale (L) et comprenant :
- une première portion de montage (12) définissant un premier logement (18) configuré pour recevoir une première partie (C₁) du cintre de façon à ce que ladite première portion de montage entoure au moins partiellement ladite première partie du cintre, ladite première portion de montage étant en outre configurée pour coopérer avec le premier support de prolongateur pour le montage de ce dernier au cintre;
- une deuxième portion de montage (20) distante de la première portion de montage, ladite deuxième portion de montage définissant un deuxième logement (26) configuré pour recevoir une deuxième partie (C₂) du cintre, distante de la première partie du cintre, de façon à ce que ladite deuxième portion de montage entoure au moins partiellement ladite deuxième partie du cintre, ladite deuxième portion de montage étant en outre configurée pour coopérer avec le deuxième support de prolongateur pour le montage de ce dernier au cintre; et
- au moins une portion de liaison (30) reliant ladite première portion de montage et ladite deuxième portion de montage et s'étendant selon ladite direction longitudinale.

2. Pièce de montage selon la revendication 1, dans laquelle la première portion de montage (12) comprend une première surface extérieure périphérique (12a) configurée pour venir en contact avec le premier support de prolongateur (50) et dans laquelle la deuxième portion de montage (20) comprend une deuxième surface extérieure périphérique configurée pour venir en contact avec le deuxième support de prolongateur (80).

3. Pièce de montage selon la revendication 1 ou 2, dans laquelle ladite première portion de montage (12) s'étend selon un premier axe de montage (X₁), et dans laquelle la deuxième portion de montage (20) s'étend selon un deuxième axe de montage (X₂), lesdits premier et deuxième axes de montage étant sensiblement parallèles à ladite direction longitudinale (L).

4. Pièce de montage selon l'une quelconque des revendications 1 à 3, dans laquelle ladite première portion de montage (12) et/ou la deuxième portion de montage (20) présente(nt) une forme générale tubulaire.

5. Pièce de montage selon la revendication 4, dans laquelle la première portion de montage (12) présente une section intérieure de forme ovale ou circulaire, et dans laquelle la première portion de montage présente une section extérieure de forme ovale ou circulaire.

6. Pièce de montage selon la revendication 4 ou 5, dans laquelle la première portion de montage (12) présente une section intérieure dont la forme est différente de la forme d'une section extérieure de ladite première portion de montage.

7. Pièce de montage selon l'une quelconque des revendications 4 à 6, dans laquelle ladite première portion de montage (12) s'étend selon un premier axe de montage (X₁) et dans laquelle une fente longitudinale (15), s'étendant parallèlement audit premier axe de montage, est ménagée sur toute la longueur de ladite première portion de montage, considérée selon ledit premier axe de montage.

8. Pièce de montage selon l'une quelconque des revendications 1 à 7, comprenant un manchon de liaison (28) comprenant ladite portion de liaison (30) et reliant la première portion de montage (12) et la deuxième portion de montage (20), un évidement (29) étant ménagé dans ledit manchon de liaison de sorte à définir ladite portion de liaison reliant les première et deuxième portions de montage.

9. Pièce de montage selon l'une quelconque des revendication 1 à 8, comprenant en outre une patte de fixation (34) faisant saillie depuis ladite portion de liaison (30), transversalement à ladite direction longitudinale (L), ladite patte de fixation étant configurée pour coopérer avec un élément de fixation, par exemple une vis, pour la fixation de la pièce de montage (10) au cintre (C) du vélo (V).

10. Pièce de montage selon l'une quelconque des revendications 1 à 9, dans laquelle la première portion de montage (12) présente une surface extérieure périphérique (12a) et un premier bord latéral (13), la première portion de montage comprenant en outre au moins une nervure (16,17) faisant saillie par rapport à ladite surface extérieure périphérique et s'étendant sur un pourtour de ladite première portion de montage, à proximité dudit premier bord latéral.

11. Système prolongateur (100) pour vélo (V) comprenant un cintre (C) ayant une première partie (C₁) et une deuxième partie (C₂), ledit système prolongateur comprenant :
- une pièce de montage (10) selon l'une quelconque des revendications 1 à 10 ; et
- un ensemble de prolongateurs (38) comprenant :
un premier prolongateur (40) comprenant un premier tube de prolongateur (44) et/ou un premier accoudoir (42);
un premier support de prolongateur (50) solidaire du premier prolongateur, le premier support de prolongateur présentant une première cavité (58) destinée à recevoir la première portion de montage (12) de la pièce de montage afin de monter ledit premier prolongateur à la première partie (C₁) du cintre du vélo;
un deuxième prolongateur (70) comprenant un deuxième tube de prolongateur (74) et/ou un deuxième accoudoir (72);
un deuxième support de prolongateur (80) solidaire du deuxième prolongateur et présentant une deuxième cavité destinée à recevoir la deuxième portion de montage (20) de la pièce de montage afin de monter ledit deuxième prolongateur à la deuxième partie (C₂) du cintre du vélo.

12. Système prolongateur selon la revendication 11, dans lequel ledit premier support de prolongateur (50) comprend une première base de montage (54) définissant ladite première cavité (58), ladite première base de montage étant apte à prendre au moins une configuration de serrage dans laquelle elle enserre ladite première portion de montage (12).

13. Système prolongateur selon la revendication 12, dans lequel ladite première base de montage (54) comprend un corps principal (56) et une partie de serrage (64) coopérant avec le corps principal, le corps principal et la partie de serrage définissant ensemble ladite première cavité (58), la première base de montage comprenant des moyens de serrage (60,62,66) configurés pour placer la première base de montage dans la configuration de serrage.

14. Système prolongateur selon la revendication 13, dans lequel le corps principal (56) de la première base de montage (54) comprend un ergot (60) et dans lequel ladite partie de serrage (64) de la première base de montage comprend un orifice (66) configuré pour recevoir ledit ergot de manière à placer la première base de montage dans la configuration de serrage.

15. Système prolongateur selon l'une quelconque des revendications 12 à 14, dans lequel ledit premier support de prolongateur (50) comprend en outre au moins une première entretoise (53) solidaire de ladite première base de montage (54) et s'étendant entre ladite première base de montage et le premier prolongateur (40).

16. Système prolongateur selon l'une quelconque des revendications 11 à 15, dans lequel la première portion de montage (12) de la pièce de montage (10) présente une surface extérieure périphérique (12a) depuis laquelle fait saillie un plot (19), le premier support de prolongateur (50) présentant une creusure (55) configurée pour recevoir ledit plot lorsque la première cavité (58) du premier support de prolongateur reçoit la première portion de montage de la pièce de montage, afin de bloquer la rotation du premier support de prolongateur par rapport à ladite première portion de montage.

17. Vélo (V) comprenant un cintre (C) présentant une première partie (C₁) et une deuxième partie (C₂), le vélo comprenant en outre un système prolongateur (100) selon l'une quelconque des revendications 11 à 16, ladite pièce de montage (10) coopérant avec ledit cintre de sorte que ladite première portion de montage (12) entoure au moins partiellement ladite première partie du cintre et ladite deuxième portion de montage (20) entoure au moins partiellement ladite deuxième partie (C₂) du cintre, le premier support de prolongateur (50) coopérant avec la première portion de montage de la pièce de montage pour le montage dudit premier prolongateur à la première partie du cintre, ladite première portion de montage s'étendant entre le premier support de prolongateur et la première partie du cintre, le deuxième support de prolongateur (80) coopérant avec la deuxième portion de montage de la pièce de montage pour le montage du deuxième prolongateur à la deuxième partie du cintre, ladite deuxième portion de montage s'étendant entre le deuxième support de prolongateur et la deuxième partie du cintre.

18. Vélo selon la revendication 17, dans lequel ledit cintre (C) comprend une portion centrale dans laquelle est ménagé un trou de fixation, dans lequel la pièce de montage (10) comprend en outre une patte de fixation (34) faisant saillie depuis ladite portion de liaison (30), transversalement à ladite direction longitudinale (L), le vélo comprenant en outre un élément de fixation, par exemple une vis, configuré pour coopérer avec la patte de fixation ainsi qu'avec ledit trou de fixation de manière à fixer ladite pièce de montage au cintre.

19. Vélo selon la revendication 18, dans lequel ladite patte de fixation (34) s'étend depuis une portion médiane (32) de ladite portion de liaison (30) de sorte que ladite patte de fixation est agencée pour permettre le centrage de la pièce de montage par rapport au cintre.
